# EUROPÄISCHE PATENTANMELDUNG

(11) **EP 1 215 007 A2**
(43) Veröffentlichungstag der Anmeldung: **19.06.2002**
(21) Anmeldenummer: 01129414.7
(22) Anmeldetag: 08.12.2001
(51) Int. Cl.: B23K 26/14, B23K 26/16

(54) **Anlage zur Laserbearbeitung von Werkstückoberflächen**

(30) Priorität: 14.12.2000 DE 10062336
(71) Anmelder: Techtrade GmbH, 50735 Köln (DE)
(72) Erfinder: Gill, Walter, 44265 Dortmund (DE); Hormes, Franz, 51199 Mönchengladbach (DE); Eiche von Christen, Franz, 50735 Köln (DE)
(74) Vertreter: Henfling, Fritz, Dipl.-Ing.

(57) **Zusammenfassung**

Zwecks Optimierung der Absaugung bei der Laserbearbeitung von Werkstückoberflächen (111) anfallenden gasförmigen und stoffförmigen Abbrandes wird eine Anlage vorgeschlagen, die aus einem auf den Bearbeitungsbereich (111') orientierten, in eine Saugleitung (314) übergehenden, sich mit seiner Mündung (311) bis in den Bearbeitungsbereich (111') erstreckenden Absaugrohr (312) besteht, wobei die Laseroptik in das in der Flucht des die Werkstückoberfläche beaufschlagenden Laserstrahls verlaufende Absaugrohr (312) integriert ist.

## Beschreibung

Die Erfindung betrifft eine Anlage zur Laserbearbeitung von Werkstückoberflächen mit einer Absaugung des bei der Bearbeitung anfallenden Abbrandes über ein auf den Bearbeitungsbereich orientiertes, in eine Saugleitung übergehendes Absaugrohr.

Bei der Laserbearbeitung von Werkstückoberflächen fällt Abbrand in gasförmigem, dann auch staubförmigem Zustand an. In Zusammenhang mit dem bei der Laserbearbeitung anfallenden Abbrand ist bereits eine Absaugung des Abbrandes vorgesehen, wie das bei anderen Bearbeitungsarten von metallischen und nichtmetallischen Werkstücken der Fall ist. Hierfür sind beispielsweise an Saugleitungen angeschlossene, über den Arbeitsbereichen installierte Absaughauben vorgesehen.

Ausgehend vom Stand der Technik lag der Erfindung zum einen die Aufgabe zugrunde, eine kompakte Anlage zur Laserbearbeitung von Werkstückoberflächen mit einer Absaugung des bei der Bearbeitung anfallenden Abbrandes zu entwickeln, weitergehend dann auch die Aufgabe, die Anlage so auszugestalten, dass beim Einsatz von die Laserbearbeitung fördernden Reaktionsstoffen während des Bearbeitungsvorganges eine Vorwärmung der Reaktionsstoffe möglich wird.

Vor diesem Hintergrund wird erfindungsgemäß als Grundkonzeption eine Anlage zur Laserbearbeitung von Werkstückoberflächen mit einer Absaugung des bei der Bearbeitung anfallenden Abbrandes über ein auf den Bearbeitungsbereich orientiertes, in eine Saugleitung übergehendes Absaugrohr, vorgeschlagen, wobei
die Laseroptik in das in der Flucht des die Werkstückoberfläche beaufschlagenden Laserstrahls verlaufende, sich mit seiner Mündung bis in den Bearbeitungsbereich erstreckende Absaugrohr integriert ist.

Diese Anlage in Kompaktbauweise, bei der sich die Mündung des Absaugrohres bis in den Nahbereich der Werkstückoberfläche des mit dem Laser zu bearbeitenden Werkstücks, diesen Bereich eingrenzend, erstreckt, erbringt die gewünschte Optimierung der Absaugung des bei der Laserbearbeitung der Werkstückoberfläche anfallenden Abbrandes.

Ausgestaltungen der Erfindung ergeben sich aus den Unteransprüchen 2 bis 13.

Für die Zugabe von Reaktionspartnern beim Bearbeitungsvorgang können ein oder mehrere vor der Mündung des Absaugrohres in den Bearbeitungsbereich des Werkstücks auslaufende Zuleitungen vorgesehen sein. Bei einer bevorzugten Ausführungsform der Anlage ist die Laseroptik in das Kernrohr eines Doppelrohres integriert, das unter Belassung der Durchgängigkeit für den Laserstrahl am von der Mündung abgekehrten Ende geschlossen ist, wobei die Außenwandung des des Absaugrohr bildenden Mantelrohres von einer oder mehreren in das Kernrohr mündenden Zuleitungen für Reaktionspartner durchsetzt ist. Zumal wenn die Zuleitungen im Abstand vom Mündungsbereich angesetzt sind, ist mit dieser Lösung der Vorteil der Vorwärmung der Reaktionsstoffe verbunden. Zum Zwecke der Vorwärmung kann dem Absaugrohr im vom Laserstrahl durchsetzen Bereich bzw. dem die Laseroptik aufnehmenden Kernrohr eine zuschaltbare Heizung zugeordnet sein. Die Vorwärmung der im Bedarfsfall zuzusetzenden Reaktionspartner fördert die Wirksamkeit bzw. das Wirksamwerden der Reaktionspartner.

Bei der ein Doppelrohr verwendenden Lösung, in dessen Kernrohr die Laseroptik integriert ist und dessen von Kernrohr und Mantelrohr gebildeter Ringraum die Funktion des Absaugrohres übernimmt, erweist es sich als vorteilhaft, wenn die Mündung des Mantelrohres über die Mündung des Kernrohres vorspringt, woraus eine weitergehende Verbesserung der Absaugung des Abbrandes resultiert. Selbstverständlich wird man die Mündung des Absaugrohres, im speziellen Fall die Mündung des Kernrohres der Laserstrahlgeometrie anpassen.

In Ausgestaltung ist vorgesehen, dass es sich bei dem in die Saugleitung integrierten Absaugpumpe um eine bei aktiviertem Laser automatisch zuschaltende Pumpe handelt, zweckmäßigerweise mit begrenztem Nachlauf.

Für die Aufbereitung des Abgases kann ein Reaktionsraum vorgesehen sein, in den die Saugleitung ausläuft. Zur Abscheidung von Feststoffen wird man eine nachgeordnete Filterstation für das Abgas vorsehen.

Anhand der Zeichnungen ist die Erfindung weitergehend erläutert. Es zeigen:
- Figur 1: eine Prinzipdarstellung der erfindungsgemäßen Gesamtanlage
- Figur 2: ein konkretes Ausführungsbeispiel der Kopfstation der Anlage im Vertikalschnitt.

Mit 11 ist ein Werkstück bezeichnet, dessen Oberfläche 111 der Laser-Bearbeitung unterworfen wird. Der Laserstrahl 21, 21' ist in an sich bekannter Weise auf den Bearbeitungsbereich 111' orientiert. Auf den Bearbeitungsbereich orientiert ist, dann auch die Absaugung 31 für den bei der Laserbearbeitung der Oberfläche 111 des Werkstücks 11 gasförmig und dann auch staubförmig anfallenden Abbrandes. Die Mündung 311 des sich in der Vertikalen erstreckenden Absaugrohres 312 befindet sich im geringen Abstand von der Oberfläche 111 des zu bearbeitenden Werkstücks 11, den Bearbeitungsbereich 111' der Werkstückoberfläche überdeckend. Das Absaugrohr 312 geht über einen Krümmer 313 in die Saugleitung 314 über, die in ein Aufbereitungsaggregat 41 mündet, an das sich ein Nachbehandlungsaggregat, beispielsweise ein Filter 42, anschließt. Bestandteil der Absaugung 31 ist die in das Saugrohr 314 eingefügte Saugpumpe 316. Mit 61 ist eine Zuleitung für im Bedarfsfall dem Bearbeitungsbereich zuzuführende Reaktionsstoffe bezeichnet, die in eine Düse 611 ausläuft, die auf den Bearbeitungsbereich 111' der Werkstückoberfläche 111 unterhalb der Mündung 311 des Absaugrohres 312 orientiert ist. Der von einer nicht dargestellten Laserquelle herrührende Laserstrahl 21 wird durch einen oberhalb der Absaugung 31 installierten Spiegel 22 zur in die Absaugung 31, d.h. in das auf die zu bearbeitende Oberfläche 111 des Werkstücks 11 orientierte Absaugrohr 312, integrierten, im Detail nicht dargestellten Laseroptik den dafür ausgelegten Bereich 313' der Wandung des Krümmers 313 durchsetzend hin abgelenkt. Der durch die in das Absaugrohr 312 integrierte Laseroptik gebündelte Laserstrahl trifft auf den Bearbeitungsbereich 111' des Werkstücks 11 auf. Mit der Aktivierung der Laserquelle einher geht die Zuschaltung der Bestandteil der Absaugung bildende Saugpumpe 316. Während des Bearbeitungsvorganges im Bearbeitungsbereich 111' des Werkstücks 11 entstehender gas- und staubförmiger Abbrand wird durch die Mündung 311 des Absaugrohres 312 die Leitungsabschnitte 313 und 314 der Saugleitung durchlaufend abgesaugt, zunächst einmal in ein Nachbehandlungsaggregat 41 überführt und von dort in einen Filter 42, bevor das gereinigte Abgas ins Freie gelangt. Belastungen durch den bei der Laserbearbeitung anfallenden Abbrand im unmittelbaren Bearbeitungsbereich werden auf diese Weise vermieden. Vermieden wird weitergehend dann auch eine Umweltbelastung durch den Abbrand.

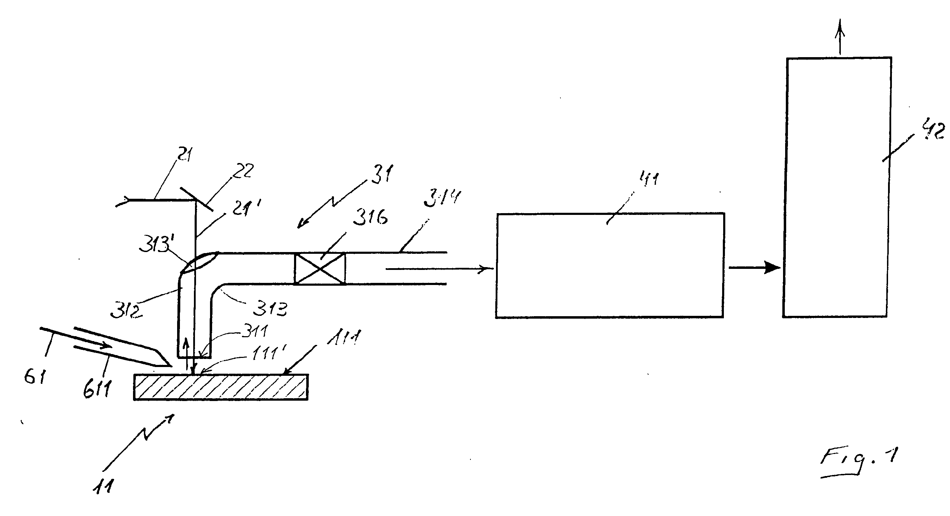

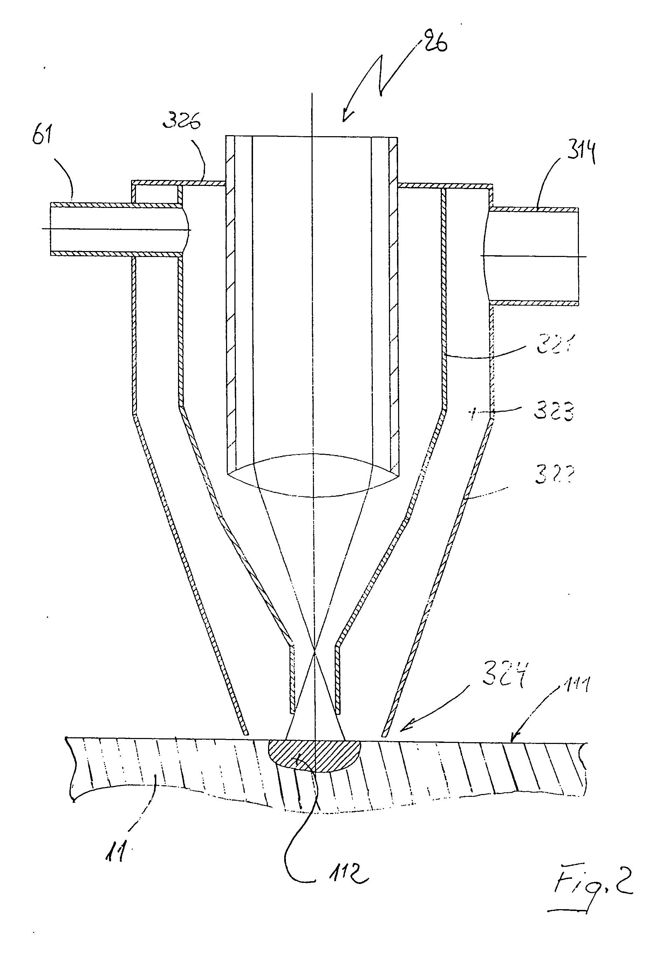

Bei dem in Figur 2 dargestellten Kopfstück der Anlage sind das zu bearbeitende Werkstück wiederum mit 11 und die zu bearbeitende Oberfläche des Werkstücks mit 111 bezeichnet. Hierbei ist die in ganz schematischer Weise dargestellte Laseroptik 26 in das Kernrohr 321 eines Doppelrohres 321, 322 integriert. Das Kernrohr 321 und der vom Kernrohr 321 und vom Mantelrohr 322 ausgebildete Ringraum 323 sind am von der Mündung 324 abgekehrten Ende geschlossen (326). Soweit für die Laseroptik 26 erforderlich, ist das Kernrohr 321 selbstverständlich zugänglich. Das Mantelrohr 322 ist durchsetzt von einer in das Kernrohr 321 mündenden Zuleitung 61 für den Eintrag von Reaktionsstoffen. Vom vom Kernrohr 321 und vom Mantelrohr 322 gebildeten Ringraum 323 geht die Saugleitung 314 (Figur 1) aus, in die die Saugpumpe 316 (Figur 1) integriert ist.

Bei aktiviertem Laser und zugeschalteter Saugpumpe 316 (Figur 1) wird bei der Laserbearbeitung der Oberfläche 111 des Werkstücks 11 gas-, gegebenenfalls dann auch staubförmiger Abbrand über den zwischen Kernrohr 321 und Mantelrohr 322 ausgebildeten Ringraum 323 in die vom Ringraum 323 ausgehende Saugleitung 314 abgesaugt und der Aufbereitung (41, 42) zugeführt (Figur 1). Sollen Reaktionspartner eingesetzt werden, werden diese über die Zuleitung 61 während des Bearbeitungsvorganges in das Kernrohr 321 eingetragen, in dem die Reaktionsstoffe eine Vorwärmung erfahren, bevor sie in den Bearbeitungsbereich gelangen. Mit 112 ist die Wärmeeinflusszone des auf die Werkstückoberfläche 111 auftreffende gebündelten Laserstrahls bezeichnet.

## Patentansprüche

1. Anlage zur Laserbearbeitung von Werkstückoberflächen mit einer Absaugung des bei der Bearbeitung anfallenden Abbrandes über ein auf den Bearbeitungsbereich orientiertes, in eine Saugleitung übergehendes Absaugrohr, **dadurch gekennzeichnet, dass** die Laseroptik in das in der Flucht des die Werkstückoberfläche (111) beaufschlagenden Laserstrahls (22') verlaufende, sich mit seiner Mündung (311) bis in den Bearbeitungsbereich (111') erstreckende Absaugrohr (312) integriert ist.

2. Anlage nach Anspruch 1, **gekennzeichnet durch** eine oder mehrere vor der Mündung des Absaugrohres (312) in den Bearbeitungsbereich (111') der Werkstückoberfläche auslaufende Zuleitungen (61) für Reaktionspartner.

3. Anlage nach Anspruch 1, **dadurch gekennzeichnet, dass** die Laseroptik (26) in das unter Belassung der Durchgängigkeit für den Laserstrahl am vom der Mündung (324) abgekehrten Ende geschlossene Kernrohr (321) eines Doppelrohres (321, 322) integriert ist und das das Absaugrohr bildende Mantelrohr (322) von einer oder mehreren in das Kernrohr (321) mündenden Zuleitungen (61) für Reaktionspartner durchsetzt ist (Figur 2).

4. Anlage nach Anspruch 3, **gekennzeichnet durch** Überstand der Mündung des Mantelrohres (322) über die Mündung des Kernrohres (321).

5. Anlage nach Anspruch 3 oder Anspruch 4, **gekennzeichnet durch** eine der Laserstrahl-Geometrie angepasste Mündung des Kernrohres (321).

6. Anlage nach Anspruch 5, **gekennzeichnet durch** eine dementsprechend angepasste Mündung des Mantelrohres (322).

7. Anlage nach einem der Ansprüche 3 bis 6, **dadurch gekennzeichnet, dass** die Zuleitungen (61) für Reaktionspartner im Abstand von den Mündungen des Doppelrohres (321, 322) angesetzt sind.

8. Anlage nach einem der Ansprüche 1 bis 7, **dadurch gekennzeichnet, dass** dem Absaugrohr im vom Laserstrahl durchsetztem Bereich bzw. dem die Laseroptik aufnehmenden Kernrohr eine zuschaltbare Heizung zugeordnet ist.

9. Anlage nach einem der Ansprüche 1 bis 8, **gekennzeichnet durch** ein gegen die Oberfläche (111) des zu bearbeitenden Werkstücks (11) anstellbares Absaugrohr (312) bzw. Doppelrohr (321, 322).

10. Anlage nach einem der Ansprüche 1 bis 9, **gekennzeichnet durch** eine in die Saugleitung (314) integrierte, bei aktiviertem Laser zuzuschaltende Saugpumpe (316).

11. Anlage nach Anspruch 10, **gekennzeichnet durch** eine bei aktiviertem Laser zuzuschaltende Saugpumpe (316) mit begrenztem Nachlauf.

12. Anlage nach einem der Ansprüche 1 bis 11, **dadurch gekennzeichnet, dass** die Saugleitung (314) in einen Reaktionsraum (41) für die Aufbereitung des Abgases ausläuft.

13. Anlage nach einem der Ansprüche 1 bis 12, **gekennzeichnet durch** eine nachgeordnete Filterstation (42) für das Abgas.
